# EUROPEAN PATENT APPLICATION

(11) **EP 4 844 919 A1**
(43) Date of publication of application: **25.11.2026**
(21) Application number: 24919902.7
(22) Date of filing: 30.11.2024
(51) Int. Cl.: H01M 50/244, H01M 50/15, H01M 50/147

(54) **HOUSING ASSEMBLY AND BATTERY**

(30) Priority: 24.01.2024 CN 202420168637 U; 27.09.2024 CN 202422364135 U; 11.10.2024 CN 202422450141 U; 22.10.2024 CN 202422556916 U
(71) Applicant: China Ruilong Technology Co., Ltd, Suzhou, Jiangsu 215000 (CN)
(72) Inventor: CHEN, Haifeng, Suzhou, Jiangsu 215000 (CN)
(74) Representative: Winter, Brandl - Partnerschaft mbB
(86) International application number: PCT/CN2024/135970
(87) International publication number: WO 2025/156822

(57) **Abstract**

The present disclosure relates to a housing assembly and a battery. The housing assembly includes a housing and a cover plate. The housing is provided with an open end. The cover plate is connected to the housing to cover the open end. The housing is provided with a plurality of pits and/or a plurality of ribs projecting from the cover plate. The present disclosure further discloses a battery. The present disclosure may effectively prevent the cover plate from being deformed, and improve flatness of the cover plate, thereby facilitating assembly of the cover plate and the housing, and improving assembly efficiency and assembly precision.

## Description

Priority information: This application claims priority to Chinese Patent Application No. 202420168637.0, filed on January 24, 2024, Chinese Patent Application No. 202422364135.8, filed on September 27, 2024, Chinese Patent Application No. 202422450141.5, filed on October 11, 2024, and Chinese Patent Application No. 202422556916.7, filed on October 22, 2024, the entire contents of which are incorporated herein by reference.

### TECHNICAL FIELD

The present disclosure relates to the field of battery technologies, and in particular, to a housing assembly and a battery.

### BACKGROUND

With the rapid development of the new energy industry, lithium batteries have gradually been widely promoted and applied due to advantages such as environmental friendliness, high energy density, and long cycle life. Existing lithium batteries generally include a housing and a cover plate connected to the housing. The cover plate is generally thin, and is very likely to deform and become uneven, which is not conducive to the assembly of the cover plate and the housing, reducing assembly efficiency and assembly precision. Moreover, an excessively thin cover plate may affect the overall strength of the battery, making the battery unsuitable for more application scenarios. Therefore, there is a need to optimize the housing and the cover plate of the battery.

### SUMMARY

Therefore, a technical problem to be resolved by the present disclosure is to reduce deformation of the cover plate and improve flatness of the cover plate, thereby facilitating assembly of the cover plate and the housing.

To solve the above technical problem, the present disclosure provides a housing assembly, including:
a housing, where the housing is provided with an open end; and
a cover plate, where the cover plate is connected to the housing to cover the open end, and the housing is provided with a plurality of pits and/or a plurality of ribs projecting from the cover plate.

In an embodiment of the present disclosure, the plurality of pits on the cover plate are arranged in an array.

In an embodiment of the present disclosure, the pits have a rectangular, V-shaped, or trapezoidal cross section.

In an embodiment of the present disclosure, at least two of the ribs are disposed to intersect each other.

In an embodiment of the present disclosure, two ribs of the plurality of ribs are disposed to intersect each other, and an intersection of the two ribs that intersect each other is located in a center region of the cover plate to form a center intersection.

In an embodiment of the present disclosure, the plurality of ribs include annular ribs, each of the annular ribs is disposed around a periphery of the center intersection, and the two ribs that intersect each other and form the center intersection both extend through the annular ribs.

In an embodiment of the present disclosure, the plurality of ribs include a plurality of annular ribs, and centers of the plurality of annular ribs coincide with each other.

In an embodiment of the present disclosure, the plurality of ribs include a plurality of rows of transversely arranged linear ribs and a plurality of columns of longitudinally arranged linear ribs, and each row of the transversely arranged linear ribs intersects with all of the longitudinally arranged linear ribs.

In an embodiment of the present disclosure, the housing includes two first side plates disposed opposite to each other, two ends of each of the two first side plates are respectively connected to a second side plate, and a corner is formed at the connection between each of the first side plates and the respective second side plate.

In an embodiment of the present disclosure, the first side plate includes a first plate portion, a second plate portion, and a connection portion connected between the first plate portion and the second plate portion, and the first plate portion projects from the second plate portion.

In an embodiment of the present disclosure, a projecting distance of the first plate portion relative to the second plate portion ranges from 0.05 to 1.0 mm, and a spacing distance between the first plate portion and the second plate portion along an extension direction of the first plate portion and the second plate portion ranges from 0.05 to 5.0 mm.

In an embodiment of the present disclosure, an outer surface of the connection portion includes one of or a combination of more than one of an arc surface, a flat surface, and an inclined surface.

In an embodiment of the present disclosure, the connection portion is plate-shaped, and an angle between the connection portion and the first plate portion ranges from 90° to 180°.

In an embodiment of the present disclosure, the connection portion includes a first arc portion connected to the second plate portion and a second arc portion connected between the first arc portion and the first plate portion, centers of curvature of the first arc portion and the second arc portion are located on two sides of the connection portion, the first arc portion smoothly transitions to the second plate portion, and the second arc portion smoothly transitions to the first plate portion.

In an embodiment of the present disclosure, the first plate portion and the second plate portion are arranged parallel to and spaced apart from each other; and the two first side plates are arranged centrosymmetrically.

In an embodiment of the present disclosure, the open end of the housing is provided with a flange edge extending outward, and the cover plate is connected to the flange edge.

In an embodiment of the present disclosure, a positive member and a negative member are connected to one of the second side plates, the housing is a conductive member, and the positive member is connected to the housing via an insulation assembly.

In an embodiment of the present disclosure, the insulation assembly includes an outer insulation member and an inner insulation member, the positive member passes through the second side plate where the positive member is located, one end of the positive member is insulated from the housing via the outer insulation member, the other end of the positive member extends into the housing and is connected to a conductive sheet, the conductive sheet is insulated from the housing via the inner insulation member.

In an embodiment of the present disclosure, the insulation assembly includes an insulation sheet, and the positive member is connected to the housing via the insulation sheet by heat-staking.

In an embodiment of the present disclosure, a corner rib plate is formed at each of the corners, the corner rib plate projects from an outer wall of the housing, a first recessed portion is provided on an inner side of the corner rib plate, and the first recessed portion is recessed outward from an inner wall of the housing.

In an embodiment of the present disclosure, a maximum distance that the corner rib plate projects beyond the outer wall of the housing is less than 0.1 mm.

In an embodiment of the present disclosure, at least two corner rib plates are disposed at each of the corners along a height direction.

In an embodiment of the present disclosure, a transverse rib plate is disposed on each of the two first side plates and/or one of the second side plates, the transverse rib plate projects from the outer wall of the housing, a second recessed portion is provided on an inner side of the transverse rib plate, and the second recessed portion is recessed outward from the inner wall of the housing.

In an embodiment of the present disclosure, a longitudinal rib plate is disposed on each of the two first side plates and/or one of the second side plates, the longitudinal rib plate projects from the outer wall of the housing, a third recessed portion is provided on an inner side of the longitudinal rib plate, and the third recessed portion is recessed outward from the inner wall of the housing.

In an embodiment of the present disclosure, the cover plate is welded to the housing via a weld bead portion, the weld bead portion is provided with a notch, the notch is sealed by a sealing member, and the sealing member is configured to tear to form a pressure relief vent when a pressure inside the housing reaches a first pressure.

In an embodiment of the present disclosure, the housing is rectangular, and the weld bead portion is in the shape of a rectangular frame, and is provided with the notch.

In an embodiment of the present disclosure, the weld bead portion is provided with at least two notches, and each of the notches is sealed by a respective sealing member.

In an embodiment of the present disclosure, orientations of at least two of the notches in each of the weld bead portions are different.

In an embodiment of the present disclosure, the housing is provided with one open end; or, the housing is provided with two open ends, and each of the open ends is closed by a respective cover plate.

In an embodiment of the present disclosure, the housing is provided with a liquid injection hole, and a liquid blocking plug is connected to the housing to block the liquid injection hole.

The present disclosure further discloses a battery, including the housing assembly according to any one of the above solutions, and a cell disposed inside the housing.

Compared with conventional technologies, the technical solutions of the present disclosure have the following advantages:
The housing assembly and the battery in the present disclosure may effectively prevent the cover plate from being deformed, and improve flatness of the cover plate, thereby facilitating assembly of the cover plate and the housing, and improving assembly efficiency and assembly precision.

### BRIEF DESCRIPTION OF THE DRAWINGS

To make the content of the present disclosure more comprehensible, the following further describes the present disclosure in detail according to specific embodiments of the present disclosure with reference to the accompanying drawings.
FIG. 1 is a schematic structural diagram of a battery in Embodiment 1 according to the present disclosure;
FIG. 2 is a top view of the structure shown in FIG. 1;
FIG. 3 is a cross-sectional view of the structure shown in FIG. 2 taken along line A-A;
FIG. 4 is a partial enlarged view of part M in FIG. 3;
FIG. 5 is a schematic diagram of one form of a pit at part M in FIG. 3;
FIG. 6 is a schematic diagram of another form of a pit at part M in FIG. 3;
FIG. 7 is an exploded view of the structure shown in FIG. 1;
FIG. 8 is a schematic diagram of the structure in FIG. 7 from another angle;
FIG. 9 is a schematic structural diagram of a battery in Embodiment 2 according to the present disclosure;
FIG. 10 is a top view of the structure shown in FIG. 9;
FIG. 11 is a cross-sectional view of the structure shown in FIG. 10 taken along line B-B;
FIG. 12 is an exploded view of the structure shown in FIG. 9;
FIG. 13 is a schematic diagram of the structure in FIG. 12 from another angle;
FIG. 14 is a schematic structural diagram of a battery in Embodiment 3 according to the present disclosure;
FIG. 15 is an exploded view of the structure shown in FIG. 14;
FIG. 16 is a schematic diagram of the structure in FIG. 15 from another angle;
FIG. 17 is a schematic structural diagram of a battery in Embodiment 4 according to the present disclosure;
FIG. 18 is a top view of the structure shown in FIG. 17;
FIG. 19 is an exploded view of the structure shown in FIG. 17;
FIG. 20 is a schematic diagram of the structure in FIG. 19 from another angle;
FIG. 21 is a schematic structural diagram of a battery in Embodiment 5 according to the present disclosure;
FIG. 22 is a cross-sectional view of a housing of the battery shown in FIG. 21;
FIG. 23 is a schematic diagram of a connection portion connected to a first plate portion and a second plate portion according to an embodiment of the present disclosure;
FIG. 24 is another partial enlarged view of part C in FIG. 22;
FIG. 25 is a partial enlarged view of part D in FIG. 22;
FIG. 26 is another cross-sectional view of a housing according to the present disclosure;
FIG. 27 is an exploded view of the housing of the embodiment shown in FIG. 21 according to the present disclosure;
FIG. 28 is an exploded view of another housing according to the present disclosure;
FIG. 29 is an exploded view of another housing with a flange edge according to the present disclosure;
FIG. 30 is an exploded view of an assembly of a positive member and an insulation assembly according to the present disclosure;
FIG. 31 is an exploded view of the battery shown in FIG. 21 according to the present disclosure;
FIG. 32 is a cross-sectional view of the battery shown in FIG. 21;
FIG. 33 is a schematic structural diagram of a battery in Embodiment 6 according to the present disclosure;
FIG. 34 is a front view of the structure shown in FIG. 33;
FIG. 35 is a top view of the structure shown in FIG. 34;
FIG. 36 is a structural diagram of a first implementation of the housing according to the present disclosure;
FIG. 37 is a structural diagram of a second implementation of the housing according to the present disclosure;
FIG. 38 is a schematic structural diagram of a battery in Embodiment 7 according to the present disclosure;
FIG. 39 is a front view of the structure shown in FIG. 38;
FIG. 40 is a top view of the structure shown in FIG. 39;
FIG. 41 is an exploded view of the structure shown in FIG. 38;
FIG. 42 is a schematic diagram of the housing in FIG. 41 from an angle;
FIG. 43 is a schematic diagram of the housing in FIG. 41 from another angle;
FIG. 44 is a schematic structural diagram of a battery in Embodiment 8 according to the present disclosure;
FIG. 45 is a front view of the structure shown in FIG. 44;
FIG. 46 is a top view of the structure shown in FIG. 45;
FIG. 47 is a schematic structural diagram of a battery in Embodiment 9 according to the present disclosure;
FIG. 48 is a top view of the battery shown in FIG. 47;
FIG. 49 is a right-side view of the battery shown in FIG. 48;
FIG. 50 is a cross-sectional view taken along line E-E in FIG. 48;
FIG. 51 is a partial enlarged view of part P in FIG. 50;
FIG. 52 is a partial enlarged view of part Q in FIG. 51;
FIG. 53 is an exploded view of the battery shown in FIG. 47;

List of reference numerals in the specification:
10. housing; 101: open end; 102: accommodating cavity; 103: first side plate; 1031: first plate portion; 1032. second plate portion; 1033. connection portion; 10331. first arc portion; 10332: second arc portion; 104. second side plate; 105: flange edge; 106: mounting hole; 107. liquid injection hole; 108. corner; 109. corner rib plate. 1091: first recessed portion; 1092: arc-shaped transition portion; 110. transverse rib plate; 1101: second recessed portion; 111. longitudinal rib plate; 1111. third recessed portion;
20. cover plate; 201: pit; 202: rib; 203. center intersection; 204: explosion-proof groove;
30. positive member; 301. positive terminal; 302. first piece; 303. second piece;
40. insulation sheet;
50 negative member;
60. liquid blocking plug;
70. cell;
80. gasket;
90. outer insulation member;
100. inner insulation member;
200. conductive sheet;
300. weld bead portion; 3001. notch;
400. sealing member.

### DETAILED DESCRIPTION

The present disclosure will be further described in combination with accompanying drawings and specific embodiments so as to enable a person skilled in the art to better understand and practice the present disclosure, but the illustrated embodiments do not constitute any limitation to the present disclosure. Apparently, the described embodiments are merely some embodiments rather than all the embodiments of the present disclosure. The following descriptions of at least one exemplary embodiment are merely illustrative, and in no way put any limitation on the present disclosure and the application or use thereof.

It needs to be understood that, in descriptions of the present disclosure, a direction or positional relationship indicated by terms such as "vertical", "up", "down", "top", "side", "inside", and "outside" is a direction or positional relationship based on illustrations in the drawings, and is merely intended for ease or brevity of description of the present disclosure, but does not necessarily mean or imply that the indicated assembly or component is provided in the specified direction or constructed or operated in the specified direction. Therefore, such terms are not to be understood as a limitation on the present disclosure. In addition, terms "first" and "second" are used only for the purpose of description, and shall not be construed as indicating or implying relative importance or implying a quantity of indicated technical features. Therefore, a feature defined by "first" or "second" may explicitly or implicitly include one or more of the features. In the description of the present disclosure, unless otherwise stated, "a/the plurality of" means two or more than two.

In the description of the present disclosure, it should be noted that unless otherwise explicitly specified or defined, the terms such as "mount", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. The specific meanings of the above terms in the present disclosure may be understood according to specific circumstances for a person of ordinary skill in the art.

### Embodiment 1

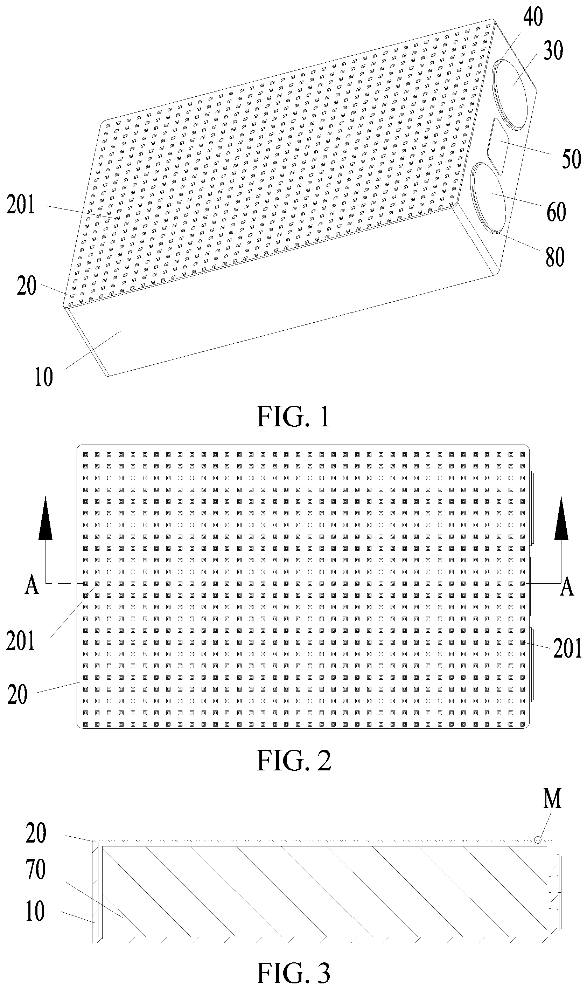

Referring to FIGS. 1 to 8, this embodiment discloses a housing assembly, including a housing 10 and a cover plate 20.

The housing 10 has an open end 101, so that a cell 70 may be placed in the housing 10 through an opening of the open end 101.

The cover plate 20 is connected to the housing 10 to cover the open end 101 so that the entire housing 10 is in a sealed condition. The cover 20 is provided with a plurality of pits 201.

By providing the plurality of pits 201 on the cover plate 20, deformation of the cover plate 20 may be effectively offset, to improve flatness of the cover plate 20 and avoid deformations such as edge lifting and overall arching, thereby improving structural stability and overall performance of the cover plate 20, facilitating assembly of the cover plate 20 and the housing 10, improving assembly convenience and assembly precision, and greatly improving assembly efficiency.

In addition, the above method does not increase the weight of the cover plate 20, and is further conducive to satisfying light-weight requirements of the battery.

The cover plate 20 may be made of a metal or an alloy material. The alloy material is preferably a stainless steel material, and further preferably stainless steel 316L.

Furthermore, as shown in FIG. 2, the plurality of pits 201 on the cover plate 20 are arranged in an array. Preferably, the plurality of pits 201 are evenly distributed so as to better eliminate internal stress of the cover plate 20 and offset deformation.

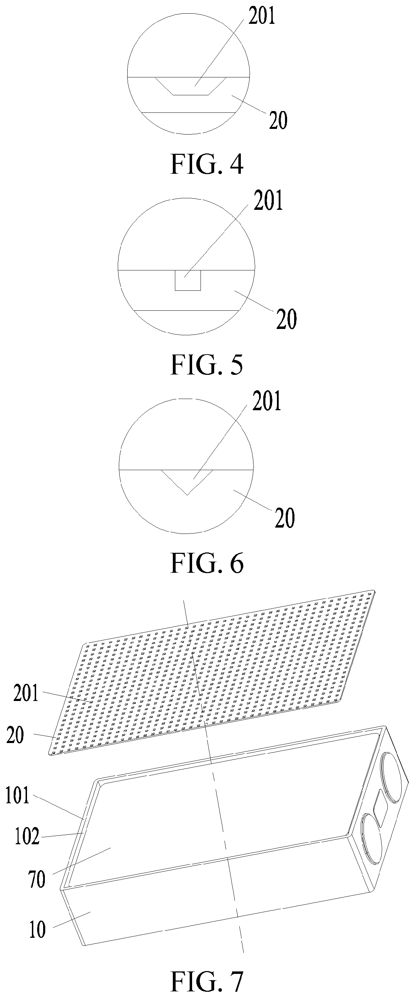

In some implementations, as shown in FIG. 4, the pit 201 has a trapezoidal cross section. The cross section may have an inverted trapezoid structure, so as to better offset deformation of the cover plate 20.

Alternatively, the pit 201 may also have a rectangular cross section as shown in FIG. 5, or the pit 201 may also have a right-angled V-shaped cross section as shown in FIG. 6.

In some implementations, as shown in FIG. 1, a positive member 30 and a negative member 50 are connected to the housing 10, and the housing 10 is a conductive member. In this case, the housing 10 and the negative member 50 together function as a negative electrode. The negative member 50 may be welded to the housing 10. An insulation assembly is an insulation sheet made of a hot-meltable material. The positive member 30 may be connected to the housing 10 via an insulation sheet 40 by heat-staking, so that the battery assembly process may be simplified, and formation of gaps between the positive member 30, the insulation sheet 40 and the housing 10 may also be effectively avoided, thereby effectively improving the sealing performance of the battery.

Insulation and isolation between the positive member 30 and the housing 10 are achieved via the insulation sheet 40. The insulation sheet 40 may be made of a polypropylene material (PP plastic).

The negative member 50 may be a nickel sheet, and the positive member 30 may be made of an aluminum material. The housing 10 may be a stainless steel member.

In some implementations, the housing 10 is further provided with a liquid injection hole for injecting electrolyte into the housing 10, and a liquid blocking plug 60 is connected to the housing 10 to block the liquid injection hole. Furthermore, the liquid blocking plug 60 may be connected to the housing 10 via a gasket 80.

The liquid blocking plug 60 may be directly welded to the housing 10.

In some implementations, the housing 10 may have only one open end 101; or the housing 10 may be provided with two open ends 101, and each open end is closed by a respective cover plate 20.

The housing may be integrally formed, or may be fabricated as a separate member.

This embodiment further discloses a battery. As shown in FIGS. 7 to 8, the battery includes a cell 70 and the housing assembly according to any one of the above solutions. The cell 70 is located in an accommodating cavity 102 inside the housing 10. A positive electrode of the cell 70 is electrically connected to the positive member 30, and a negative electrode of the cell 70 is electrically connected to the negative member 50.

### Embodiment 2

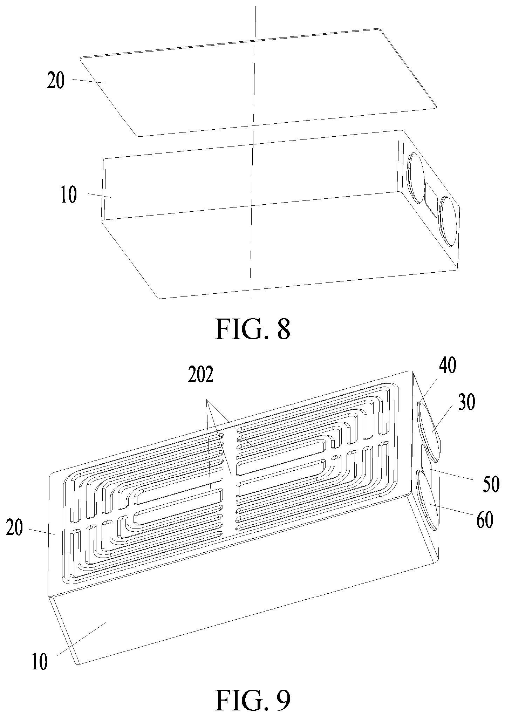

Referring to FIGS. 9 to 16, a main difference between this embodiment and Embodiment 1 lies in that: the cover plate 20 is provided with a plurality of ribs 202 projecting from the cover plate 20, so as to enhance strength of the cover plate 20 and avoid deformation of the cover plate 20.

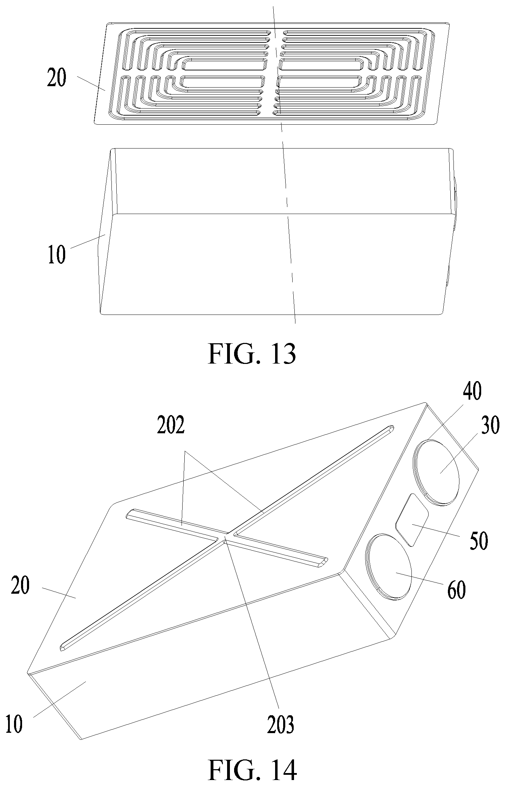

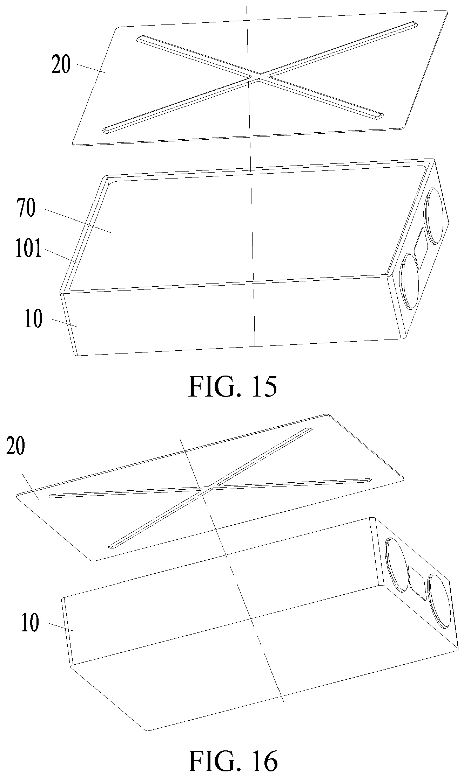

As shown in FIGS. 13 and 16, the ribs 202 are formed by an inner wall of the cover plate 20 projecting outward, so that the thickness of the cover plate 20 remains essentially the same, and the weight of the cover plate 20 is not significantly increased.

In some implementations, at least two of the ribs 202 are disposed to intersect each other to better ensure the strength of the cover plate 20.

Preferably, as shown in FIGS. 9 and 14, the housing assembly is provided with two ribs 202 that are disposed to intersect each other, and an intersection of the two ribs 202 that intersect each other is located in a center region of the cover plate 20 to form a center intersection 203, so as to better avoid local deformation of the cover plate 20.

As shown in FIGS. 9 to 13, the two ribs 202 that intersect each other and form the center intersection 203 are both linear ribs 202, and are arranged in a cross shape.

Alternatively, as shown in FIGS. 14 to 16, the two ribs 202 that intersect each other and form the center intersection 203 are both linear ribs 202, and are arranged in an X-shaped pattern.

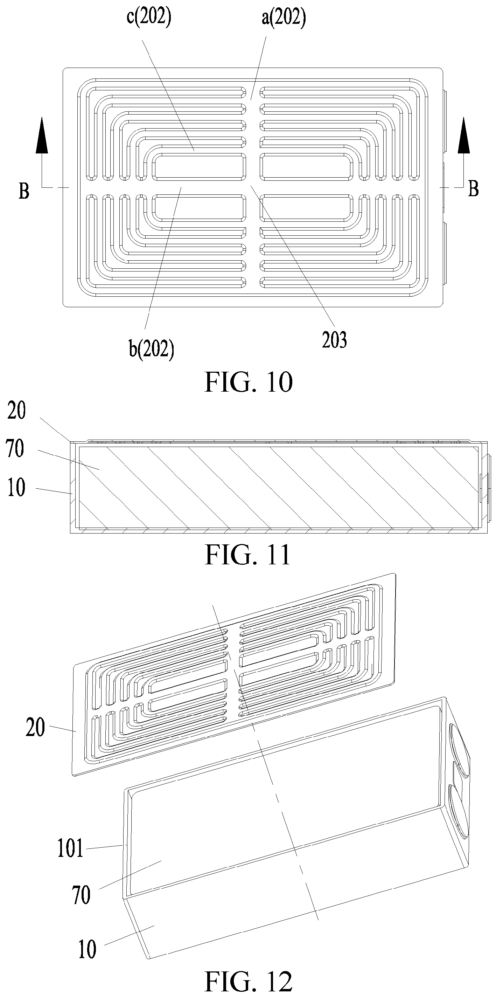

Furthermore, as shown in FIGS. 9 to 13, the housing assembly further includes annular ribs 202. Each annular rib 202 is disposed around a periphery of the center intersection 203, and the two ribs that intersect each other and form the center intersection 203 both extend through the annular ribs, so as to better reduce local deformation of the cover plate, ensure the overall flatness of the cover plate, and avoid deformations such as edge lifting and overall arching into a U shape. Specifically, as shown in FIG. 10, reference signs a, b, and c each represent a rib 202. The reference signs a and b represent two linear ribs that intersect each other, the intersection of which forms the center intersection 203. The reference sign c represents an annular rib, which is disposed around the periphery of the ribs that intersect each other.

Preferably, as shown in FIG. 10, a plurality of annular ribs 202 may be disposed, and centers of the plurality of annular ribs 202 coincide with each other, so as to better improve the load balance of the cover plate 20.

Alternatively, in some other implementations, as shown in FIGS. 14 to 16, only two ribs that intersect each other in an X-shaped pattern are disposed on the cover plate 20.

This embodiment further discloses a battery. As shown in FIGS. 12 to 13 or FIGS. 15 to 16, the battery includes a cell 70 and the housing assembly according to any one of the above solutions. The cell 70 is located inside the housing 10. A positive electrode of the cell 70 is electrically connected to the positive member 30, and a negative electrode of the cell 70 is electrically connected to the negative member 50.

### Embodiment 3

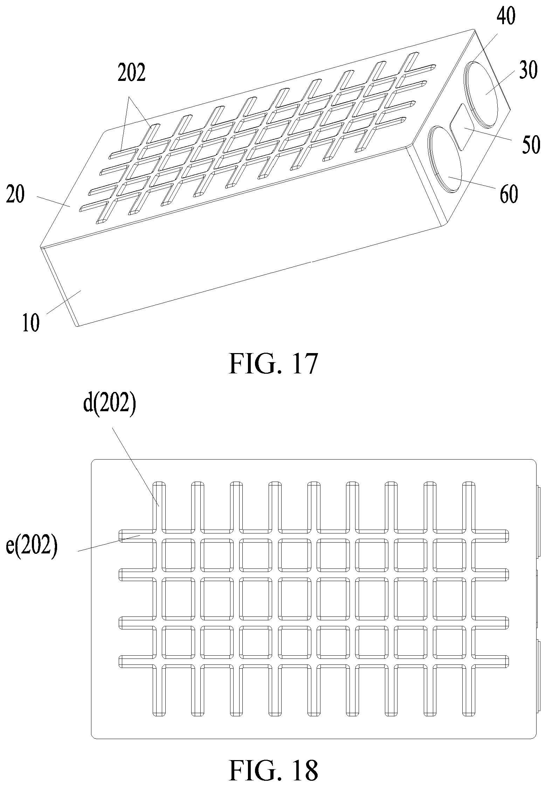

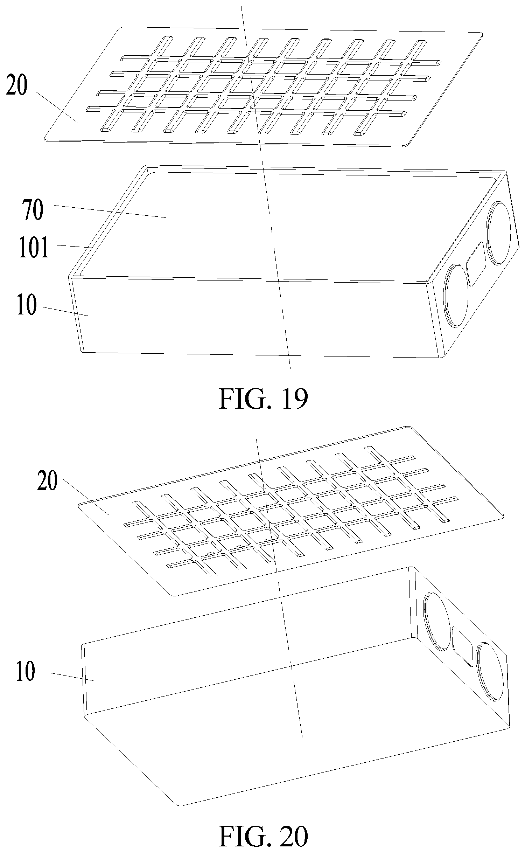

Referring to FIGS. 17 to 20, a main difference between this embodiment and Embodiment 2 lies in that: the plurality of ribs 202 include a plurality of rows of transversely arranged linear ribs and a plurality of columns of longitudinally arranged linear ribs, and each row of the transversely arranged linear ribs intersects with all of the longitudinally arranged linear ribs. That is, the ribs intersect with each other to form a plurality of grid-like cells arranged in a lattice pattern. As shown in FIG. 20, the ribs 202 are also formed by the inner wall of the cover plate 20 projecting outward.

Specifically, as shown in FIG. 17, reference signs d and e each represent a linear rib. The reference sign d represents a longitudinally arranged linear rib, the reference sign e represents a transversely arranged linear rib, and the two ribs intersect.

The arrangement of the ribs 202 in the above implementation is more conducive to processing, and may also effectively prevent the cover plate 20 from being deformed to affect flatness.

This embodiment further discloses a battery. As shown in FIGS. 19 to 20, the battery includes a cell 70 and the housing assembly according to any one of the above solutions. The cell 70 is located inside the housing 10. A positive electrode of the cell 70 is electrically connected to the positive member 30, and a negative electrode of the cell 70 is electrically connected to the negative member 50.

### Embodiment 4

A difference between this embodiment and the above embodiments lies in that: the cover plate 20 of this embodiment is provided with a plurality of pits 201 and a plurality of ribs 202 projecting from the cover plate 20. That is, this embodiment is a combination of Embodiment 1 and Embodiment 2, or a combination of Embodiment 1 and Embodiment 3. This method may better avoid deformation of the cover plate 20, and ensure flatness of the cover plate 20 to the greatest extent possible.

The methods of the above embodiments may all effectively prevent the cover plate from being deformed, to improve flatness of the cover plate and avoid deformations such as edge lifting and overall arching, thereby facilitating assembly of the cover plate and the housing, and improving assembly efficiency and assembly precision.

### Embodiment 5

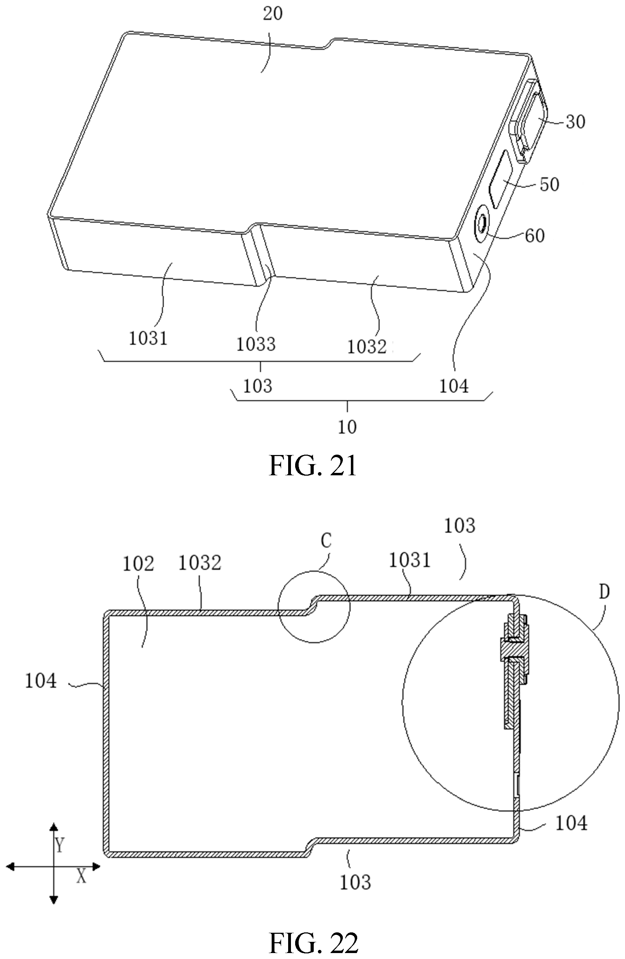

Referring to FIGS. 21 to 32, a main difference between this embodiment and Embodiment 1 lies in that: the housing 10 includes two first side plates 103 disposed opposite to each other, two ends of each of the two first side plates 103 is respectively connected to a second side plate 104, and a corner 108 is formed at the connection between each of the first side plates 103 and the respective second side plate 104.

The first side plate 103 includes a first plate portion 1031, a second plate portion 1032, and a connection portion 1033 connected between the first plate portion 1031 and the second plate portion 1032. The first plate portion 1031 projects from the second plate portion 1032.

The first plate portion 1031 projects from the second plate portion 1032 to form a step structure. By providing the step structure on a side wall of the housing 10, the structural strength of the battery housing 10 is enhanced, thereby improving drop resistance, which is conducive to reducing the risk of deformation of the battery housing 10 upon dropping, and making the cell 70 in the battery housing 10 less likely to be squeezed by the battery housing 10 and suffer a functional failure.

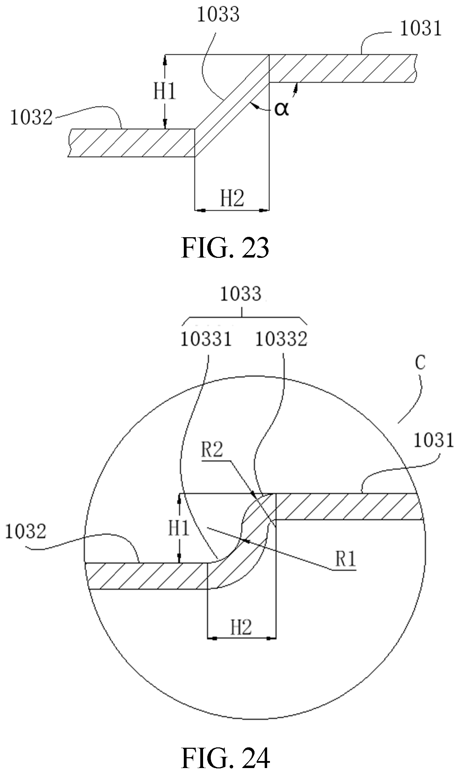

In some implementations, as shown in FIGS. 23 and 24, a projecting distance H1 of the first plate portion 1031 relative to the second plate portion ranges from 0.05 to 1.0 mm, and a spacing distance H2 between the first plate portion 1031 and the second plate portion 1032 along an extension direction of the first plate portion 1031 and the second plate portion 1032 ranges from 0.05 to 5.0 mm. In FIG. 22, a projecting direction of the first plate portion 1031 relative to the second plate portion 1032 is consistent with a width direction Y of the housing 10. The projecting distance H1 refers to the distance between the connected ends of the two plate portions in the width direction Y. An extension direction of the first plate portion 1031 and an extension direction of the second plate portion 1032 are consistent with a length direction X of the housing 10. The spacing distance H2 refers to the distance between the connected ends of the two plate portions in the length direction X. By setting the projecting distance H1 and the spacing distance H2, the size of the step structure is made more appropriate, which is conducive to ensuring the drop resistance of the battery housing 10.

An outer surface of the connection portion 1033 includes one of or a combination of more than one of an arc surface, a flat surface, and an inclined surface.

In some implementations, the connection portion 1033 is plate-shaped, and an angle α between the connection portion 1033 and the first plate portion 1031 ranges from 90° to 180°. In the implementation shown in FIG. 23, the angle α between the connection portion 1033 and the first board portion 1031 is 135°, and structural strength in the width and length directions is more balanced.

In some implementations, as shown in FIG. 24, the connection portion 1033 includes a first arc portion 10331 connected to the second plate portion 1032, and a second arc portion 10332 connected between the first arc portion 10331 and the first plate portion 1031, centers of curvature of the first arc portion 10331 and the second arc portion 10332 are located on two sides of the connection portion 1033, the first arc portion 10331 smoothly transitions to the second plate portion 1032, and the second arc portion 10332 smoothly transitions to the first plate portion 1031. By providing the first arc portion 10331 and the second arc portion 10332, internal stress at the turning portion of the first side plate 103 may be reduced, and processing and forming are facilitated.

Optionally, cross sections of the first arc portion 10331 and the second arc portion 10332 are arc-shaped and approximately define an S-shaped structure. A radius R1 of the first arc portion 10331 may be greater than, less than, or equal to a radius R2 of the second arc portion 10332. Preferably, as shown in FIG. 24, the radius R1 of the first arc portion 10331 is greater than the radius R2 of the second arc portion 10332. The configuration of the connection portion 1033 may effectively enhance drop impact strength of the housing 10.

Optionally, the wall thickness of the connection portion 1033 is the same as those of the first plate portion 1031 and the second plate portion 1032.

As shown in FIGS. 22 to 24, the first plate portion 1031 and the second plate portion 1032 are arranged parallel to and spaced apart from each other, and the two first side plates 103 are arranged centrosymmetrically, providing an aesthetic appearance and a skillful design. The battery housing 10 has a substantially uniform width throughout, which is conducive to ensuring the capacity of the battery housing 10, and preventing a reduction in the battery capacity caused by a decrease in the capacity of the battery housing 10.

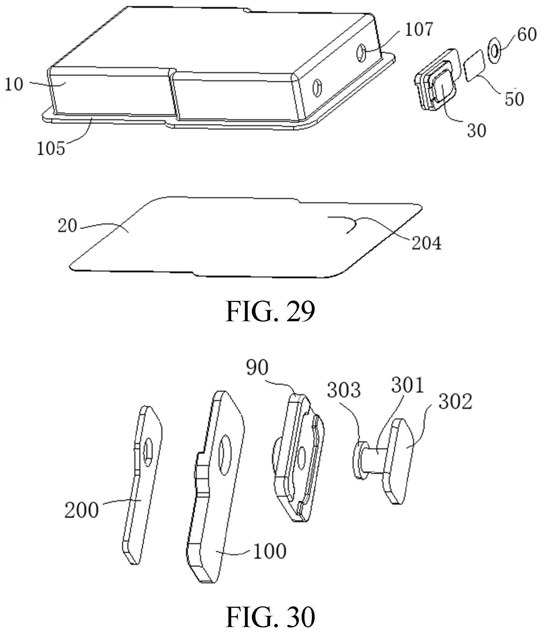

In some other feasible implementations, as shown in FIG. 29, the open end 101 of the housing 10 that is configured to be connected to the cover plate 20 is provided with a flange edge 105 extending outward, and the cover plate 20 is connected to the flange edge 105. Preferably, the flange edge 105 is arranged parallel to the cover plate 20, and extends horizontally away from the accommodating cavity 102. The cover plate 20 may be connected to the flange edge 105 by welding followed by adhesive dispensing, thereby sealing the accommodating cavity 102. The accommodating cavity 102 is a cavity for placing the cell 70, and is in communication with the open end 101.

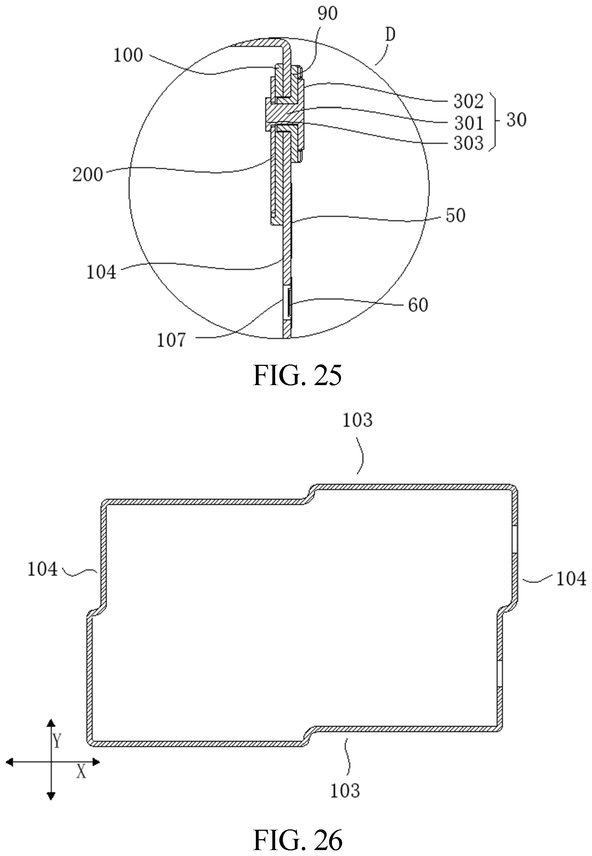

In some implementations, as shown in FIG. 22, the second side plate 104 has a linear cross section, and may be directly made of a sheet material, for example, a flat panel. In some other implementations, as shown in FIG. 26, the second side plate 104 may also be configured into the same structure as the first side plate 103, i.e., a connection portion 1033 is also provided on the second side plate 104 to form a step structure, so as to further enhance the drop impact strength of the housing 10.

A positive member 30 and a negative member 50 are connected to one of the second side plates 104, the housing 10 is a conductive member, and the positive member 30 is connected to the housing 10 via the insulation assembly. In this case, the housing 10 and the negative member 50 together function as a negative electrode. The negative member 50 may be welded to the housing 10.

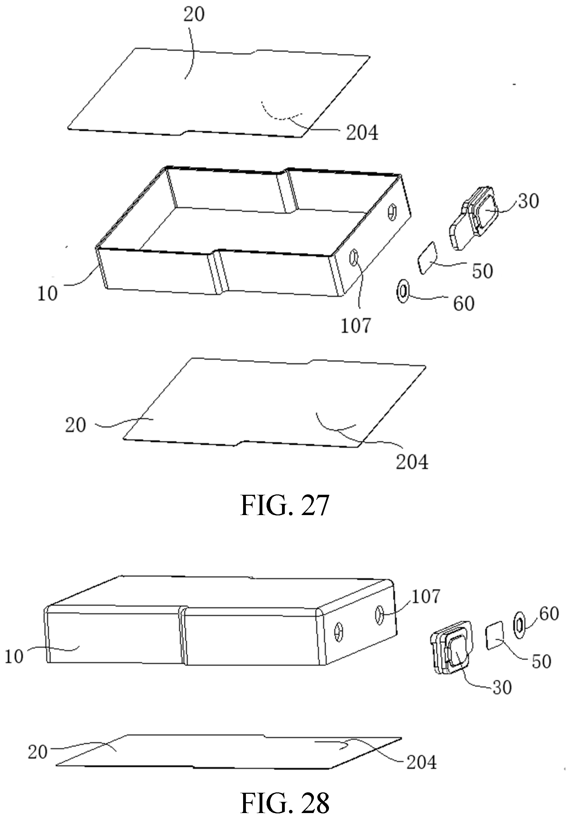

A bottom plate of the housing 10 and the cover plate 20 are both made of a metal or an alloy material. The alloy material is preferably a stainless steel material, and further preferably stainless steel 316L. Preferably, in this embodiment, the bottom plate and the cover plate 20 are both made of an electrically conductive stainless steel material. As shown in FIGS. 27 to 29, cross sectional shapes of the bottom plate and the cover plate 20 correspond to the cross sectional shape of the accommodating cavity 102. In this case, the housing 10 may be provided with only one open end 101, the open end 101 is covered by the cover plate 20, and a bottom surface of the housing 10 opposite to the open end 101 is the bottom plate. Alternatively, the housing 10 may be provided with two open ends 101, and one cover plate 20 is provided for each open end 101.

In some implementations, the insulation assembly includes an outer insulation member 90 and an inner insulation member 100. The positive member 30 passes through the second side plate 104 where the second side plate 104 is located. One end of the positive member 30 is insulated from the housing 10 via the outer insulation member 90. The other end of the positive member 30 extends into the housing 10 and is connected to a conductive sheet 200. The conductive sheet 200 is insulated from the housing 10 via the inner insulation member 100.

Specifically, as shown in FIGS. 25 and 30, the positive member 30 includes a positive terminal 301, and a first piece 302 and a second piece 303 respectively connected to two ends of the positive terminal 301. The positive terminal 301 passes through the second side plate 104 and extends out of the second side plate 104. The outer insulation member 90, the inner insulation member 100, and the conductive sheet 200 are all disposed surrounding an outer side of the positive terminal 301. The second piece 303 is located on an outer side of the conductive sheet 200.

As shown in FIG. 25 and FIGS. 27 to 29, the second side plate 104 is further provided with a liquid injection hole 107 for introducing electrolyte into the accommodating cavity 102. The liquid blocking plug 60 is mounted in the liquid injection hole 107. The liquid blocking plug 60 is made of stainless steel. The accommodating cavity 102 may be easily filled with electrolyte through the liquid injection hole 107.

Furthermore, as shown in FIGS. 27 to 29, the bottom plate and the cover plate 20 are each provided with at least one explosion-proof groove 204 for pressure relief. The explosion-proof groove 204 is arc-shaped, and faces the accommodating cavity 102.

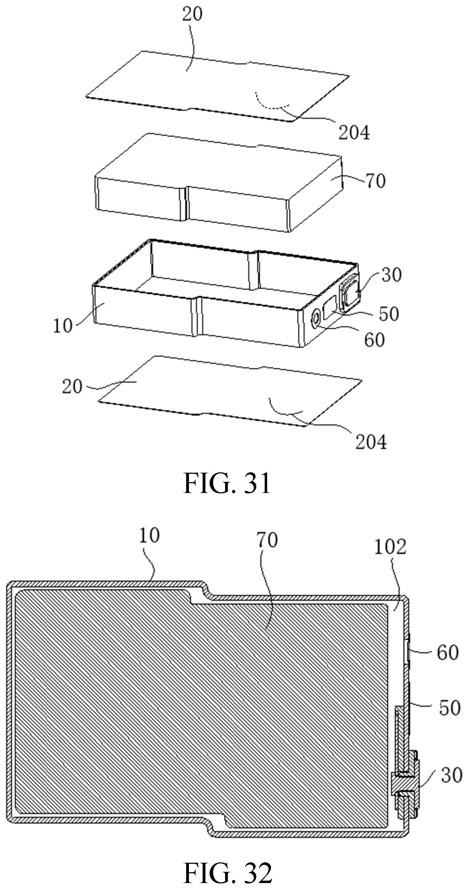

As shown in FIGS. 31 and 32, the present disclosure further provides a battery. The battery includes a cell 70 and the housing assembly according to any one of the above solutions. The cell 70 is located in the accommodating cavity 102 inside the housing 10. A positive electrode of the cell 70 is electrically connected to the positive member 30, and a negative electrode of the cell 70 is electrically connected to the negative member 50. In addition, the accommodating cavity 102 may be filled with electrolyte.

As a preferred implementation, the cell 70 is arranged conformally or non-conformally with the accommodating cavity 102. As shown in FIG. 32, the cross sectional shape of the cell 70 corresponds to the cross sectional shape of the accommodating cavity 102, so as to make full use of the inner space of the battery housing 10 and increase the battery capacity.

### Embodiment 6

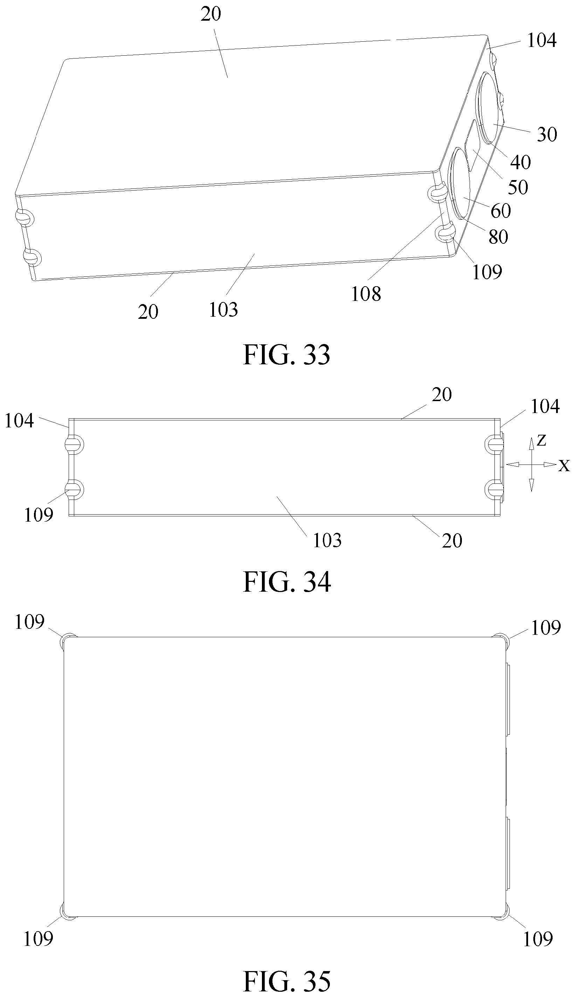

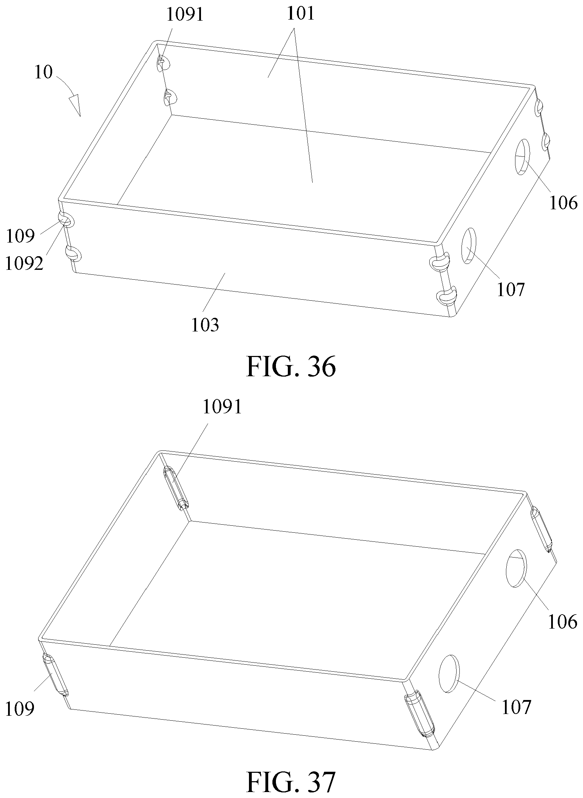

Referring to FIGS. 33 to 37, a main difference between this embodiment and Embodiment 1 lies in that: the housing 10 includes two first side plates 103 disposed opposite to each other, two ends of each of the two first side plates 103 are each connected to a respective second side plate 104, and a corner 108 is formed at the connection between each of the first side plates 103 and the respective second side plate 104.

A corner rib plate 109 is formed at each corner 108 of the housing 10. The corner rib plate 109 projects from an outer wall of the housing 10. A first recessed portion 1091 is provided on an inner side of the corner rib plate 109, and the first recessed portion 1091 is recessed outward from an inner wall of the housing 10.

Preferably, the housing 10 may be rectangular.

It may be understood that the housing 10 may be provided with only one open end 101; or two ends of the housing 10 may be provided with two open ends 101, and each open end 101 is sealed by a respective cover plate 20.

The corners 108 of the housing 10 are parts of the housing 10 that easily deform. Once a corner 108 deforms, the whole housing 10 may undergo a significant deformation. By disposing the corner rib plate 109 at each corner 108, the rigidity at the corner 108 may be effectively enhanced, thereby preventing the whole housing 10 from being deformed. In addition, instead of being obtained by directly welding a separate rib plate to the outer wall of the housing 10, the corner rib plate 109 is formed by the inner wall of the housing 10 recessed outward, which may avoid welding defects and welding deformations, thereby better ensuring the strength of the housing 10, increasing the inner space of the housing 10, and reducing welding costs.

In some implementations, a maximum distance that the corner rib plate 109 projects beyond the outer wall of the housing 10 is less than 0.1 mm, so as to ensure the strength of the housing 10 and avoid an excessively large size of the housing 10.

Furthermore, two sides of the corner rib plate 109 at each corner 108 are respectively connected to the outer wall of the housing 10 on two sides of the corner 108 via an arc-shaped transition portion 1092, so as to further reduce stress concentration and improve the rigidity of the housing 10.

In some implementations, at least two corner rib plates 109 are disposed at each corner 108 of the housing 10 along a height direction (Z direction); or one corner rib plate 109 may be disposed at each corner 108 of the housing 10, and the length of the corner rib plate in the height direction (Z direction) may be properly increased, so as to better ensure the strength of the housing 10. The Z direction is the height direction of the housing 10, the X direction is the length direction of the housing 10, and the X direction is perpendicular to the Z direction.

When at least two corner rib plates 109 are disposed at each corner 108 of the housing 10 along the height direction, the distance between two adjacent corner rib plates 109 is greater than 0.5 mm, so as to facilitate processing.

In some implementations, a positive member 30 and a negative member 50 are connected to one of the second side plates 104 to lead out a positive electrode and a negative electrode of the cell 70. The housing 10 is a conductive member, and the positive member 30 is connected to the housing 10 via an insulation assembly.

Furthermore, the insulation assembly is an insulation sheet 40 made of a hot-meltable material. The positive member 30 is connected to the housing 10 via the insulation sheet 40 by heat-staking, and the negative member 50 is welded to the outer wall of the housing 10. The insulation sheet 40 may be an insulator made of a non-metallic material. To further ensure the hot-staking effect, the insulation sheet 40 may be made of a polypropylene material (PP plastic).

In the above structure, the housing 10 and the negative member together function as a negative electrode, and insulation and isolation between the positive member and the housing 10 are achieved via the insulation sheet 40.

Furthermore, the housing 10 is provided with a mounting hole 106, and the positive member 30 extends into the mounting hole 106 through the insulation sheet 40 to be electrically connected to the positive electrode of the cell 70 in the housing 10.

The negative member 50 may be a nickel sheet, and the positive member 30 may be made of an aluminum material.

In some implementations, the second side plate 104 where the positive member 30 and the negative member 50 are located is further provided with a liquid injection hole 107 for injecting electrolyte into the housing 10, and a liquid blocking plug 60 may be directly welded to the housing 10 to block the liquid injection hole 107.

Furthermore, the liquid blocking plug 60 is connected to the housing 10 via a gasket 80 which is metallic. The liquid blocking plug 60 may be made of steel.

This embodiment further discloses a battery, including the housing 10 and a cell 70 disposed inside the housing 10. A positive electrode of the cell 70 is electrically connected to the positive member 30, and a negative electrode of the cell 70 is electrically connected to the negative member 50.

### Embodiment 7

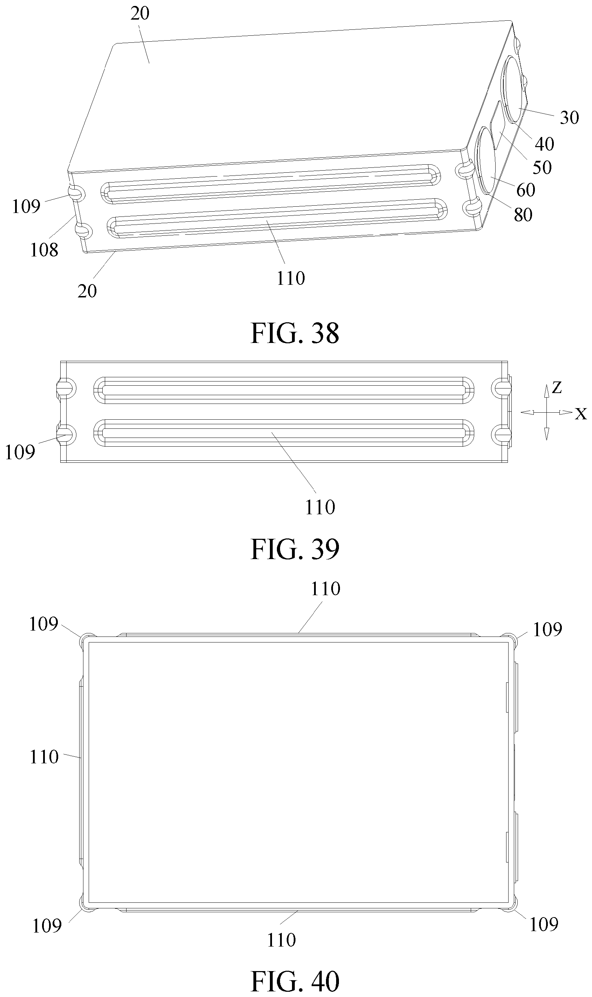

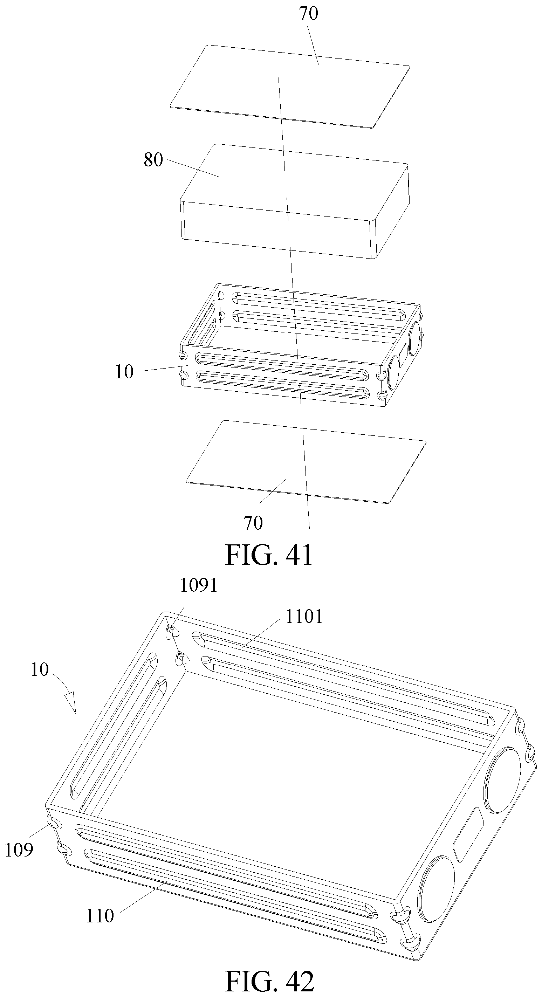

Referring to FIGS. 38 to 43, a main difference between this embodiment and Embodiment 6 lies in that: the positive member 30 and the negative member 50 are disposed on one of the second side plates 104, a transverse rib plate 110 is disposed on each of the other second side plate 104 and the two first side plates 103, the transverse rib plate 110 projects from the outer wall of the housing 10, a second recessed portion 1101 is provided on an inner side of the transverse rib plate 110, and the second recessed portion 1101 is recessed outward from the inner wall of the housing 10.

Alternatively, the transverse rib plate 110 is disposed only on each of the two first side plates 103, or the transverse rib plate 110 is disposed only on one of the second side plates 104.

Through the coordinated arrangement of the transverse rib plates 110, the corner rib plates 109 and the like, the strength of the housing 10 may be effectively enhanced, and the deformation of the housing 10 may be prevented, so as to better protect the cell 70 in the housing 10, thereby improving the operational reliability and the service life of the battery.

In some implementations, a maximum distance that the transverse rib plate 110 projects beyond the outer wall of the housing 10 is less than 0.1 mm, so as to ensure the strength of the housing 10 and avoid an excessively large size of the housing 10.

In some implementations, at least two transverse rib plates 110 are disposed along the height direction on the side plate where the transverse rib plates 110 are located; or only one transverse rib plate 110 is disposed on a corresponding side plate of the housing 10, and the length of the transverse rib plate 110 in the height direction (Z direction) may be properly increased, so as to better ensure the strength of the housing.

When at least two transverse rib plates 110 are disposed on the corresponding side plate of the housing 10 along the height direction, the distance between two adjacent transverse rib plates 110 is greater than 0.5 mm, so as to facilitate processing.

This embodiment further discloses a battery, including the housing 10 according to any one of the foregoing solutions and a cell 70 disposed inside the housing 10. A positive electrode of the cell 70 is electrically connected to the positive member 30, and a negative electrode of the cell 70 is electrically connected to the negative member 50.

### Embodiment 8

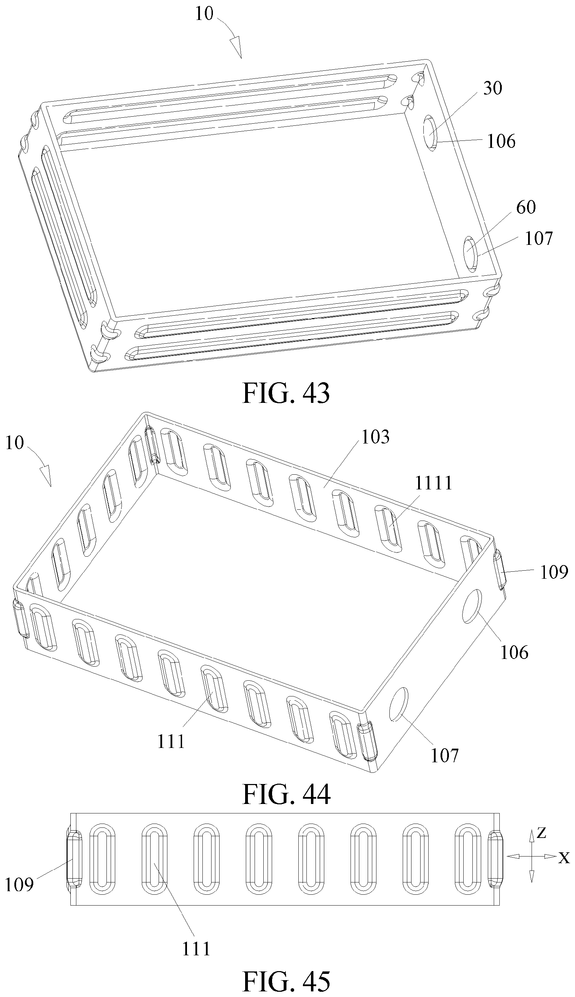

Referring to FIGS. 44 to 46, a main difference between this embodiment and Embodiment 6 lies in that: the positive member 30 and the negative member 50 are disposed on one of the second side plates 104, a longitudinal rib plate 111 is disposed on each of the other second side plate 104 and the two first side plates 103, the longitudinal rib plate 111 projects from the outer wall of the housing 10, a third recessed portion 1111 is provided on an inner side of the longitudinal rib plate 111, and the third recessed portion 1111 is recessed outward from the inner wall of the housing 10.

Alternatively, the longitudinal rib plate 111 is disposed only on each of the two first side plates 103, or the longitudinal rib plate 111 is disposed only on one of the second side plates 104.

Through the arrangement of the longitudinal rib plates 111, the corner rib plates 109 and the like, the strength of the housing 10 may be effectively enhanced, and the deformation of the housing 10 may be prevented, so as to better protect the cell 70 in the housing 10, thereby improving the operational reliability and the service life of the battery.

In some implementations, a maximum distance that the longitudinal rib plate 111 projects beyond the outer wall of the housing 10 is less than 0.1 mm, so as to ensure the strength of the housing 10 and avoid an excessively large size of the housing 10.

In some implementations, at least two longitudinal rib plates 111 are disposed along the direction (X direction) perpendicular to the height direction on the side plate where the longitudinal rib plates 111 are located. Furthermore, the distance between two adjacent longitudinal rib plates 111 is greater than 0.5 mm, so as to facilitate processing.

This embodiment further discloses a battery, including the housing 10 according to any one of the foregoing solutions and a cell 70 disposed inside the housing 10. A positive electrode of the cell 70 is electrically connected to the positive member 30, and a negative electrode of the cell 70 is electrically connected to the negative member 50.

### Embodiment 9

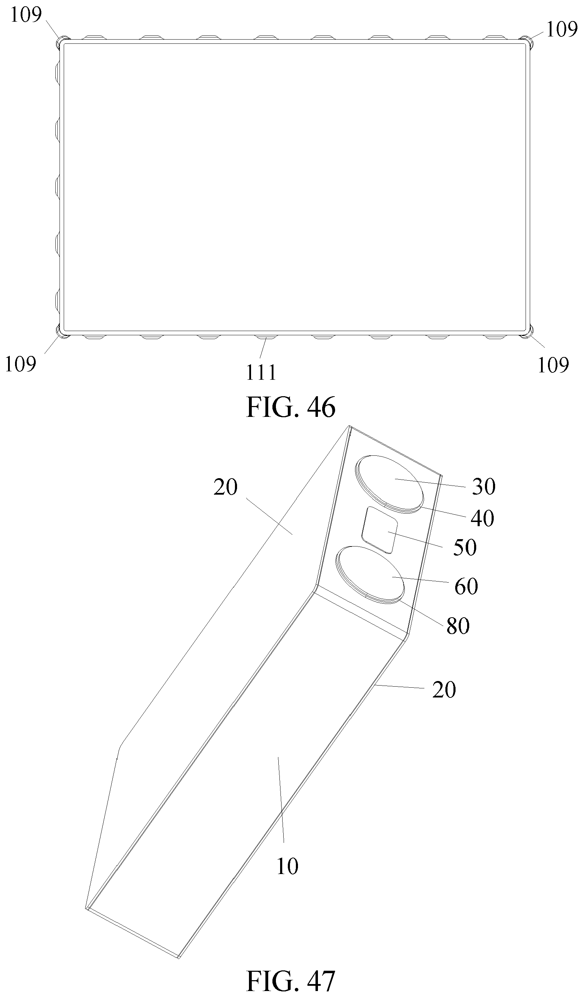

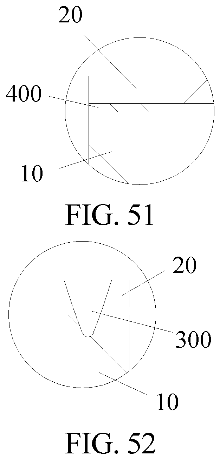

Referring to FIGS. 47 to 53, a main difference between this embodiment and Embodiment 1 lies in that: as shown in FIGS. 51 to 53, the cover plate 20 is welded to the housing 10 via a weld bead portion 300, the weld bead portion 300 is provided with a notch 3001, the notch 3001 is sealed by a sealing member 400, and the sealing member 400 is configured to tear to form a pressure relief vent when the pressure inside the housing 10 reaches a first pressure.

When an abnormal situation such as overcharging, over-discharging, a short circuit, or squeezing, or the like occurs in the battery, a large amount of gas is generated inside the battery housing 10, causing a rapid increase in the pressure inside the housing 10. Since the strength at the position of the sealing member 400 is weaker than the surrounding parts, when the pressure increases to the first pressure, the pressure may cause the sealing member 400 tear, thereby forming the pressure relief vent and achieving pressure relief. Moreover, generally, when the above abnormal situation occurs in the battery, in addition to the generation of a large amount of gas inside the housing 10, a significant amount of heat is released, causing the temperature of the battery to increase rapidly. The increased temperature also causes the sealing member 400 to be more easily tear or melt to form the pressure relief vent, thereby achieving objectives of pressure relief and explosion prevention.

According to the housing assembly having the above configuration, instead of forming a groove on the cover plate 20 to provide an explosion-proof valve, the pressure relief vent is formed by the sealing member to achieve pressure relief, thereby simplifying the structure and the preparation process, ensuring the reliability of pressure relief, facilitating the processing of the pressure relief structure, and significantly reducing the processing costs.

The cover plate 20 and the housing 10 are welded by penetration welding, and the weld bead portion 300 is formed between the cover plate 20 and the housing 10 after welding.

Penetration welding is a welding method in which two or more workpieces are completely melted by a welding heat source so that they form an integral whole. During the penetration welding process, the weld metal fully penetrates the workpieces, thereby achieving a bent connection of the workpieces. Penetration welding does not require the use of a filler material, but instead directly melts the base material by a high-energy heat source, thereby achieving welding.

In some implementations, the housing 10 may be provided with only one open end 101; or, as shown in FIG. 47, the housing 10 may be provided with two open ends 101, each open end 101 is closed by a respective cover plate 20, and each cover plate 20 is welded to the housing 10 via a weld bead portion 300.

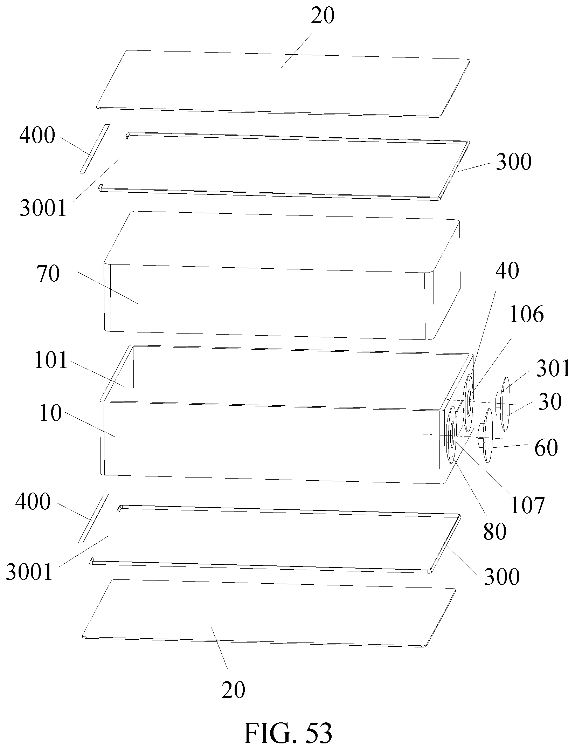

Furthermore, as shown in FIG. 53, the housing 10 is rectangular, and the weld bead portion 300 is in the shape of a rectangular frame and is provided with a notch 3001. During welding, welding may be performed around the edge of the housing 10 to form a rectangular weld bead portion 300, and the welding path is not closed so as to leave the notch 3001.

In some implementations, the explosion-proof housing assembly further includes a positive member 30 and a negative member 50, the housing 10 is a conductive member, the insulation assembly is an insulation sheet 40 made of a hot-meltable material, the positive member 30 is connected to the housing 10 via the insulation sheet 40 by heat-staking, and the negative member 50 is welded to the outer wall of the housing 10.

In the above configuration, the housing 10 and the negative member together function as a negative electrode, and insulation and isolation between the positive member and the housing 10 are achieved via the insulation sheet 40. The housing 10 may be a stainless steel member.

The insulation sheet 40 may be an insulator made of a non-metallic material. To further ensure the hot-staking effect, the insulation sheet 40 may be made of a polypropylene material (PP plastic).

The negative member 50 may be a nickel sheet, and the positive member 30 may be made of an aluminum material.

Furthermore, as shown in FIG. 53, the housing 10 is provided with a mounting hole 106, the positive member 30 includes a positive terminal 301, and the positive terminal 301 extends into the mounting hole 106 through the insulation sheet 40 to be electrically connected to a positive electrode of a cell 70.

In some implementations, the explosion-proof housing assembly further includes a liquid blocking plug 60, the housing 10 is provided with a liquid injection hole 107 for injecting electrolyte into the housing 10, and the liquid blocking plug 60 is directly welded to the housing 10 to block the liquid injection hole 107.

Furthermore, the liquid blocking plug 60 is connected to the housing 10 via a gasket 80. Both the liquid blocking plug 60 and the gasket 80 may be made of steel.

In some implementations, the cover plate 20 may be a stainless steel member.

In some implementations, the sealing member 400 may be made of a polypropylene material (PP plastic).

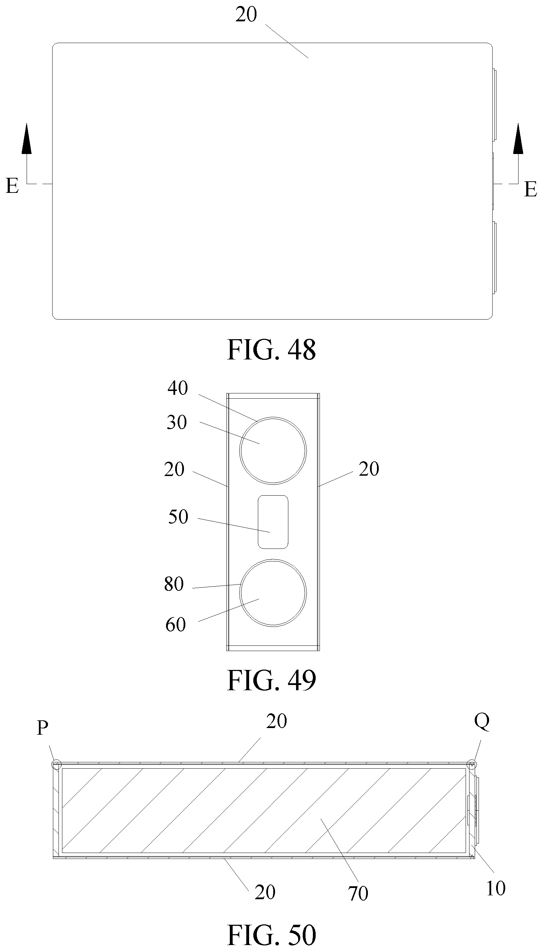

This embodiment further discloses a battery, including the explosion-proof housing assembly and a cell 70 disposed inside the housing 10, as shown in FIGS. 50 and 53.

A positive electrode of the cell 70 is electrically connected to the positive member 30, and a negative electrode of the cell 70 is electrically connected to the negative member 50.

Furthermore, the cell 70 may be rectangular, which facilitates heat dissipation and offers a relatively high energy density.

According to the battery of this embodiment, the formation of the pressure relief vent by the sealing member to achieve pressure relief simplifies the structure and the preparation process, effectively ensures the reliability of pressure relief, facilitates the processing of the pressure relief structure, and significantly reduces the processing costs.

### Embodiment 10

A main difference between this embodiment and Embodiment 9 lies in that: each weld bead portion 300 is provided with at least two notches 3001 (not shown), and each of the notches 3001 is sealed by a respective sealing member 400, so as to achieve pressure relief at multiple points.

In the above configuration, when the pressure inside the housing 10 reaches a first pressure, pressure relief vents may be formed at the sealing members 400 at the notches 3001, which is more conducive to increasing the pressure relief speed.

In some implementations, orientations of at least two of the notches 3001 in each weld bead portion 300 are different. For example, when the housing 10 is rectangular and the weld bead portion 300 is in the shape of a rectangular frame, one notch 3001 is located on an edge on the left side of the weld bead portion 300, and another notch 3001 is located on an edge on the front side of the weld bead portion 300. That is, notches 3001 may be disposed on different sides of the weld bead portion 300, so as to form pressure relief vents in different directions, thereby achieving pressure relief in multiple directions, and improving the pressure relief speed and pressure relief uniformity.

This embodiment further discloses a battery, including the above housing assembly and a cell 70 disposed inside the housing 10.

According to the battery of this embodiment, the formation of the pressure relief vent by the sealing member to achieve pressure relief effectively ensures the reliability of pressure relief, facilitates the processing of the pressure relief structure, and significantly reduces the processing costs.

Any combination of all the foregoing optional technical solutions may be used to form optional embodiments of this application, that is, a plurality of embodiments may be combined randomly, to obtain requirements for dealing with different application scenarios, all of which fall within the protection scope of this application, and details are not described herein again.

It should be noted that, the embodiments are merely examples for clear description, and are not intended to limit the implementations. For a person of ordinary skill in the art, changes or variations in other different forms may be made based on the foregoing descriptions. The embodiments are not exhaustive herein. However, obvious changes or variations derived therefrom shall fall within the protection scope of the present invention.

## Claims

1. A housing assembly, comprising:
a housing, wherein the housing is provided with an open end; and
a cover plate, wherein the cover plate is connected to the housing to cover the open end, and the housing is provided with a plurality of pits and/or a plurality of ribs projecting from the cover plate.

2. The housing assembly according to claim 1, wherein the plurality of pits on the cover plate are arranged in an array.

3. The housing assembly according to claim 1, wherein the pits have a rectangular, V-shaped, or trapezoidal cross section.

4. The housing assembly according to claim 1, wherein at least two of the ribs are disposed to intersect each other.

5. The housing assembly according to claim 4, wherein two ribs of the plurality of ribs are disposed to intersect each other, and an intersection of the two ribs that intersect each other is located in a center region of the cover plate to form a center intersection.

6. The housing assembly according to claim 5, wherein the plurality of ribs comprise annular ribs, each of the annular ribs is disposed around a periphery of the center intersection, and the two ribs that intersect each other and form the center intersection both extend through the annular ribs.

7. The housing assembly according to claim 6, wherein the plurality of ribs comprise a plurality of annular ribs, and centers of the plurality of annular ribs coincide with each other.

8. The housing assembly according to claim 4, wherein the plurality of ribs comprise a plurality of rows of transversely arranged linear ribs and a plurality of columns of longitudinally arranged linear ribs, and each row of the transversely arranged linear ribs intersects with all of the longitudinally arranged linear ribs.

9. The housing assembly according to claim 1, wherein the housing comprises two first side plates disposed opposite to each other, two ends of each of the two first side plates are respectively connected to a second side plate, and a corner is formed at the connection between each of the first side plates and the respective second side plate.

10. The housing assembly according to claim 11, wherein the first side plate comprises a first plate portion, a second plate portion, and a connection portion connected between the first plate portion and the second plate portion, and the first plate portion projects from the second plate portion.

11. The housing assembly according to claim 10, wherein a projecting distance of the first plate portion relative to the second plate portion ranges from 0.05 to 1.0 mm, and a spacing distance between the first plate portion and the second plate portion along an extension direction of the first plate portion and the second plate portion ranges from 0.05 to 5.0 mm.

12. The housing assembly according to claim 10, wherein an outer surface of the connection portion comprises one of or a combination of more than one of an arc surface, a flat surface, and an inclined surface.

13. The housing assembly according to claim 12, wherein the connection portion is plate-shaped, and an angle between the connection portion and the first plate portion ranges from 90° to 180°.

14. The housing assembly according to claim 12, wherein the connection portion comprises a first arc portion connected to the second plate portion and a second arc portion connected between the first arc portion and the first plate portion, centers of curvature of the first arc portion and the second arc portion are located on two sides of the connection portion, the first arc portion smoothly transitions to the second plate portion, and the second arc portion smoothly transitions to the first plate portion.

15. The housing assembly according to claim 10, wherein the first plate portion and the second plate portion are arranged parallel to and spaced apart from each other; and the two first side plates are arranged centrosymmetrically.

16. The housing assembly according to claim 10, wherein the open end of the housing is provided with a flange edge extending outward, and the cover plate is connected to the flange edge.

17. The housing assembly according to claim 9, wherein a positive member and a negative member are connected to one of the second side plates, the housing is a conductive member, and the positive member is connected to the housing via an insulation assembly.

18. The housing assembly according to claim 17, wherein the insulation assembly comprises an outer insulation member and an inner insulation member, the positive member passes through the second side plate where the positive member is located, one end of the positive member is insulated from the housing via the outer insulation member, the other end of the positive member extends into the housing and is connected to a conductive sheet, the conductive sheet is insulated from the housing via the inner insulation member.

19. The housing assembly according to claim 17, wherein the insulation assembly comprises an insulation sheet, and the positive member is connected to the housing via the insulation sheet by heat-staking.

20. The housing assembly according to claim 9, wherein a corner rib plate is formed at each of the corners, the corner rib plate projects from an outer wall of the housing, a first recessed portion is provided on an inner side of the corner rib plate, and the first recessed portion is recessed outward from an inner wall of the housing.

21. The housing assembly according to claim 20, wherein a maximum distance that the corner rib plate projects beyond the outer wall of the housing is less than 0.1 mm.

22. The housing assembly according to claim 20, wherein at least two corner rib plates are disposed at each of the corners along a height direction.

23. The housing assembly according to claim 20, wherein a transverse rib plate is disposed on each of the two first side plates and/or one of the second side plates, the transverse rib plate projects from the outer wall of the housing, a second recessed portion is provided on an inner side of the transverse rib plate, and the second recessed portion is recessed outward from the inner wall of the housing.

24. The housing assembly according to claim 20, wherein a longitudinal rib plate is disposed on each of the two first side plates and/or one of the second side plates, the longitudinal rib plate projects from the outer wall of the housing, a third recessed portion is provided on an inner side of the longitudinal rib plate, and the third recessed portion is recessed outward from the inner wall of the housing.

25. The housing assembly according to claim 1, wherein the cover plate is welded to the housing via a weld bead portion, the weld bead portion is provided with a notch, the notch is sealed by a sealing member, and the sealing member is configured to tear to form a pressure relief vent when a pressure inside the housing reaches a first pressure.

26. The housing assembly according to claim 1, wherein the housing is rectangular, and the weld bead portion is in the shape of a rectangular frame, and is provided with the notch.

27. The housing assembly according to claim 1, wherein the weld bead portion is provided with at least two notches, and each of the notches is sealed by a respective sealing member.

28. The housing assembly according to claim 1, wherein orientations of at least two of the notches in each of the weld bead portions are different.

29. The housing assembly according to claim 1, wherein the housing is provided with one open end; or, the housing is provided with two open ends, and each of the open ends is closed by a respective cover plate.

30. The housing assembly according to claim 1, wherein the housing is provided with a liquid injection hole, and a liquid blocking plug is connected to the housing to block the liquid injection hole.

31. A battery, comprising: the housing assembly according to any one of claims 1 to 30, and a cell disposed inside the housing.
